Europäisches Patentamt

European Patent Office

Office européen des brevets

(11) Veröffentlichungsnummer: **0 212 071**
**A1**

## (12) EUROPÄISCHE PATENTANMELDUNG

(21) Anmeldenummer: 86106382.4

(22) Anmeldetag: **10.05.86**

(51) Int. Cl.⁴: **B28D 7/04**

Die Bezeichnung der Erfindung wurde geändert (Richtlinien für die Prüfung im EPA, A-III, 7.3).

(30) Priorität: 05.06.85 DE 3520081

(43) Veröffentlichungstag der Anmeldung:
**04.03.87 Patentblatt 87/10**

(84) Benannte Vertragsstaaten:
**AT BE CH DE FR GB IT LI LU NL SE**

(71) Anmelder: **W. Goldschmidt GmbH & Co. KG**
**Josef-Beyerle-Strasse**
**D-7252 Well der Stadt(DE)**

(72) Erfinder: **Köhler, Erich Karl**
**Max Casparstrasse 83**
**D-7252 Well Der Stadt(DE)**

(74) Vertreter: **Dreiss, Hosenthien & Fuhlendorf**
**Gerokstrasse 6**
**D-7000 Stuttgart 1(DE)**

(54) **Tragvorrichtung für Werkstücke aus Stein bei einer Bandsäge.**

(57) Diamant-Bandsäge für Steinplatten mit Antriebsrad (4), Umlenkrad (5) und endlosem Sägeband, beider am Maschinengestell (1) ein durch zwei Ausleger (13, 14) gebildeter Doppelgelenkarm (11) beweglich angebracht ist, und am Ende des zweiten Auslegers (14) eine Stütz-und Tragplatte (18) drehbar angeordnet ist.

Fig. 1

EP 0 212 071 A1

## Diamant-Bandsäge für Wertzstücke aus Stein

Die Erfindung betrifft eine Bandsäge für Werkstücke aus Stein, insbesondere Steinplatten mit einem Maschinengestell, einem Antriebsrad und einem Umlenkrad, sowie einem über beide laufenden endlosen Sägeband.

Derartige Bandsägen sind bekannt. Das besondere Problem der Verwendung von Bandsägen bei Steinplatten besteht -im Gegensatz zu Bandsägen für andere Werkstoffe, wie z.B. Holz -darin, daß die Werkstücke (z.B. Treppenplatten, Waschtische, Tischplatten, usw.) sehr großflächig und dadurch, infolge des hohen spezifischen Gewichts von Stein, außerordentlich schwer sind. Entsprechend - schwierig ist die Handhabung, insbesondere, wenn auf dem Arbeitstisch an der Stelle, an der er vom Sägeband durchsetzt wird, eine besonders feinfühlige und exakte Führung des Werkstücks entlang einer vorgegebenen Linie erforderlich ist, um bestimmte Konturen auszuschneiden. Man hat seither dazu in der Umgebung des Arbeitstisches Rollen angeordnet, auf denen das Werkstück abgestützt werden kann; mit Hilfe der Rollen aber eine allseits gleichmäßige und feinfühlige Beweglichkeit dieser außerordentlich schweren und großflächigen Werkstücke zu erzielen, war jedoch bis jetzt nicht möglich, da sich bei der Lagerung der Rollen derart, daß sie in mehreren Richtungen drehbar sind, immer wieder bevorzugte Bewegungsrichtungen ergeben, die durch die Handhabung kompensiert werden müssen. Außerdem funktioniert das nur dann, wenn das Werkstück nicht nur in einer, sondern auch in zwei Dimensionen großflächig ist, so daß die Last immer flächig auf eine große Anzahl von Rollen verteilt werden kann. Beim Schneiden von Treppenplatten o. dgl. ist das aber nicht gewährleistet. Man konnte also praktisch seither im Prinzip mit Kreissägen oder Bandsägen nur gerade Schnitte ausführen.

Eine Möglichkeit zum Schneiden von Öffnungen in Platten (z.B für Waschtische) besteht darin, entlang der vorgesehenen Kontur in sehr kleinen Abständen Löcher zu bohren, dann entlang dieser Lochlinie die Öffnung auszubrechen und die Bruchfläche glattzuschleifen. Dieses Verfahren ist außerordentlich aufwendig. Ein weiteres Verfahren zum Schneiden nicht-gerader Konturen bestand im Fräsen der Konturen mittels drehangetriebener und· über Schablonen-gesteuerter Fräser. Hierzu bedarf es konstruktiv sehr aufwendiger Maschinen; außerdem ist auch dieses Verfahren sehr zeitaufwendig und teuer. Es bedingt zudem eine starke Werkzeugabnützung.

Schließlich bestand herkömmlicherweise ein Verfahren zum Herstellen nicht-gerader Konturen darin, durch eine Vielzahl von geraden Schnitten eine nicht-gerade Kontur anzunähern und dann die verbleibenden Kanten abzuschleifen oder senkrecht zur gewünschten Kontur in die Rohplatte in kurzen Abständen Schlitze einzusägen, die dabei entstehenden, schmalen Stege auszubrechen und die Bruchfläche abzuschleifen. Geeignete Maschinen zum Sägen nicht-gerader Konturen bei Steinplatten gibt es nicht.

Demgemäß ist es Aufgabe der vorliegenden Erfindung, eine Bandsäge der eingangs genannten Art derart weiterzubilden, daß Werkstücke aus Stein, insbesondere großflächige und sehr schwere Steinplatten im Bereich des Sägebandes besonders einfach und leicht entlang nicht-gerader Konturen geführt werden können.

Erfindungsgemäß wird diese Aufgabe dadurch gelöst, daß an dem Maschinengestell ein durch zwei Ausleger gebildeter Doppelgelenkarm angebracht ist, wobei der eine Ausleger am Maschinengestell mittels eines Gelenks in einer parallel zur Arbeitsebene am Sägeband verlaufenden Ebene beweglich angelenkt ist, beide Ausleger mittels eines Gelenks ebenfalls in einer zur Arbeitsebene am Sägeband parallelen Ebene beweglich sind, und ferner am Ende des zweiten Auslegers eine Stütz-und Tragplatte drehbar angeordnet ist, deren Stütz-und Tragfläche in der Arbeitsebene liegt.

Eine vorteilhafte Weiterbildung der Erfindung ist im Unteranspruch 2 definiert.

Ein Ausführungsbeispiel der Erfindung wird im folgenden anhand der beigefügten Zeichnungen beschrieben. Es stellen dar:

Figur 1 eine Vorderansicht eines Ausführungsbeispiels;

Figur 2 eine Draufsicht des Ausführungsbeispiels.

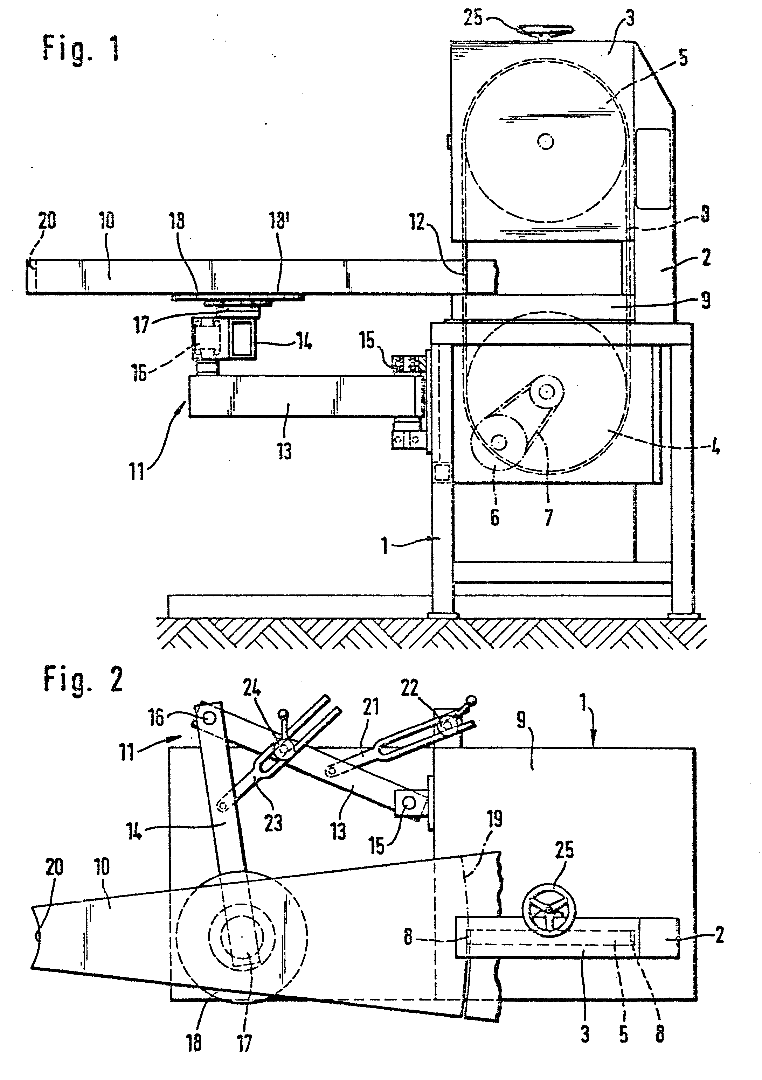

Figur 1 zeigt die Vorderansicht einer Stein-Bandsäge, gebildet durch ein Maschinengestell 1, eine Säule 2, die mit dem Maschinengestell 1 verbunden ist, sowie einen mit der Säule 2 verbundenen Gehäuseteil 3. Im Maschinengestell 1 befindet sich das Antriebsrad 4, im Gehäuseteil 3 ein Umlenkrad 5. Der Antrieb des Antriebsrades erfolgt über einen lediglich schematisch angedeuteten Motor 6 und ein ebenfalls nur schematisch angedeutetes Getriebe 7.

Antriebsrad 4 und Umlenkrad 5 treiben ein endloses, mit Diamant belegtes Sägeband 8, bspw. 16 mm breit und 0,5 mm stark, mit diamantierten Spitzen. Auf dem Maschinengestell 1 ist ein Arbeitstisch 9 angeordnet, auf dem das Werkstück 10 verschoben werden kann, um so auf den Bereich 12 des Sägebandes 8 hinbewegt zu werden, daß die gewünschte Linie von dem endlos umlaufenden Sägeband 8 geschnitten wird.

Bei dieser Bewegung des Werkstücks 10 wird dieses von dem allgemein mit 11 bezeichneten Doppelgelenkarm unterstützt. Der allgemein mit 11 bezeichnete Doppelgelenkarm besteht aus einem ersten Ausleger 13 und einem zweiten Ausleger 14 (vgl. auch Fig. 2). Der erste Ausleger 13 ist mit dem Gelenk 15 drehbar am Maschinengestell 1 angelenkt; er trägt, ebenfalls mit Hilfe des Gelenks 16 drehbar, den zweiten Ausleger 14. Am Ende des zweiten Auslegers 14 ist, mit Hilfe eines Lagers 17 eine runde Stütz-und Tragplatte 18 drehbar angebracht. Mit Hilfe dieser beweglichen Anordnung ist es möglich, die Stelle des Werkstücks 10, die im Bereich 12 des Sägebandes 8 geschnitten wird, leicht und feinfühlig so zu bewegen, daß entlang jeden gewünschten Weges 19 ein Schnitt durch das Werkstück 10 erfolgen kann. Dies ist insbesondere dann von Bedeutung, wenn sehr großflächige Werkstücke, die im vorliegenden Fall ja durch Steinplatten gebildet werden, in einem großen Abstand vom Sägeband 8 weit bewegt werden müssen, um die gewünschte Konturen zu erzeugen.

In Fig. 2 ist noch dargestellt, daß an dem ersten Ausleger 13 ein Feststellarm 21 beweglich angeordnet ist, der am Maschinengestell 1 mittels einer Klemmeinrichtung 22 festgelegt werden kann. In gleicher Weise ist am zweiten Ausleger 14 ein Feststellarm 23 angeordnet, der am ersten Ausleger 13 mittels einer zweiten Klemmeinrichtung 24 festgelegt werden kann. Erfolgt dies bspw. in der in Fig. dargestellten Position der Stütz-und Tragplatte 2, so kann durch leichte Drehung des Werkstücks 10 um die Drehachse des Lagers 17 die in Fig. 2 dargestellte kreisförmige Außenkontur einer Treppenplatte für eine Wendeltreppe gesägt werden. Dabei erfolgt über den Doppelgelenkarm 11 und die von ihm gehaltene Stütz-und Tragplatte 18 die Hauptabstützung des Werkstücks 10, während in Nähe des Bereichs 12 der Bandsäge 8 eine weitere Unterstützung an der Stelle des Schnitts durch den Arbeitstisch 9 erfolgt. Auf diese Weise kann man auch in besonders einfacher Weise eine kreisrunde Tischplatte herstellen. Die erwähnte "zusätzliche" Abstützung auf dem Arbeitstisch 9 ist jedoch nicht unbedingt erforderlich. Es ist auch möglich und in Einzelfällen sogar sehr zweckmäßig, das Werkstück 10 derart auf die Stütz-und Tragplatte 18 aufzulegen, daß das Ende, das von dem Sägeband geschnitten wird, frei - schwebt.

Gleichermaßen ist es aber auch möglich, die bei 20 dargestellte "Innenkontur" einer Treppenplatte zu sägen, wenn durch eine entsprechende Bewegung der Ausleger 13 und 14 das gesamte Werkstück 10 entsprechend geführt wird.

Der Einfachheit der Darstellung halber sind in Fig. 1 die Klemmeinrichtungen 22, 24 und die Feststellarme 21, 23 nicht mit dargestellt.

Das Handrad 25 dient zur Höhenverstellung des Umlenkrades im oberen Gehäuseteil und damit zur Spannung des Sägebandes 8.

Wie sich aus der Darstellung des Ausführungsbeispiels ergibt, ist die Beweglichkeit des Auslegers 13 gegenüber dem Maschinengestell 1 und die Beweglichkeit der Ausleger 13 und 14 gegeneinander in einer Ebene gegeben, die parallel zur Ebene des Arbeitstisches 9 liegt, Die drehbare Stütz-und Tragfläche 18' des Stütz-und Tragetisches 18 liegt dann in derselben Ebene wie der Arbeitstisch 19'.

Im Ausführungsbeispiel bildet der Arbeitstisch 9 die Arbeitsebene.

## Ansprüche

1. Diamant-Bandsäge für Werkstucke aus Stein, insbesondere Steinplatten, mit einem Maschinengestell (1), einem Antriebsrad (4) und einem Umlenkrad (5), sowie einem über beide laufenden endlosen Sägeband (8), dadurch gekennzeichnet, daß an dem Maschinengestell (1) ein durch zwei Ausleger (13, 14) gebildeter Doppelgelenkarm (11) angebracht ist, wobei der eine der Ausleger - (13) am Maschinengestell (1) mittels eines Gelenks (15) in einer parallel zur Arbeitsebene am Sägeband (8) verlaufenden Ebene beweglich angelenkt ist, beide Ausleger (13, 14) mittels eines weiteren Gelenks (16) ebenfalls in einer zur Arbeitsebene parallelen Ebene am Sägeband (8) gegeneinander beweglich sind, und ferner am Ende des zweiten Auslegers (14) eine Stütz-und Tragplatte (18) drehbar angeordnet ist, deren Stütz-und Tragfläche (18') in der Arbeitsebene liegt.

2. Bandsäge nach Anspruch 1, dadurch gekennzeichnet, daß die Stellung der beiden Ausleger (13, 14) zueinander mittels eines Feststellarmes - (23) und einer Klemmeinrichtung (24) festgelegt werden kann, und daß ferner die Position des am Maschinengestell (1) angelenkten Auslegers (13) gegenüber diesem ebenfalls mittels eines Feststellarms (21) und einer weiteren Klemmeinrichtung - (22) festgelegt werden kann.

Fig. 1

Fig. 2

Europäisches
Patentamt

# EUROPÄISCHER RECHERCHENBERICHT

Nummer der Anmeldung

## EINSCHLÄGIGE DOKUMENTE

EP 86106382.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | US - A - 1 886 321 (WALKER)<br>* Gesamt *<br>-- | | B 28 D 7/04 |
| A | US - A - 4 505 624 (KELLY)<br>* Gesamt *<br>-- | | |
| A | DE - B - 1 566 272 (SIEMENS)<br>* Spalte 3, Zeile 15 *<br>-- | | |
| A | DE - B - 1 077 164 (SIEMENS)<br>* Fig.5; Spalte 3, Zeilen 19,20 *<br>-- | | |
| A | FR - A - 778 280 (BUCKENMEYER)<br>* Fig.1 *<br>---- | | |

| RECHERCHIERTE SACHGEBIETE (Int. Cl. 4) |
|---|
| A 61 C |
| B 23 Q |
| B 27 B |
| B 28 D |

Der vorliegende Recherchenbericht wurde für alle Patentansprüche erstellt.

| Recherchenort | Abschlußdatum der Recherche | Prüfer |
|---|---|---|
| WIEN | 12-09-1986 | GLAUNACH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82